# EUROPEAN PATENT APPLICATION

(11) **EP 1 016 888 A1**
(43) Date of publication of application: **05.07.2000**
(21) Application number: 99403329.8
(22) Date of filing: 31.12.1999
(51) Int. Cl.: G02B 6/44

(54) **Folding groove and multi-core optical cable composed of the same**

(30) Priority: 31.12.1998 KR 9863849; 31.12.1998 KR 9863856; 31.12.1998 KR 9863868; 31.12.1998 KR 9863875; 31.12.1998 KR 9863878; 31.12.1998 KR 9863902
(71) Applicant: Daewoo Telecom Ltd., Incheon 404-250 (KR)
(72) Inventor: Kwon, Oh Joon, Incheon, 401-042 (KR); Chung, Myong Cho, Yunsoo-ku, Incheon, 406-110 (KR)
(74) Representative: Thinat, Michel

(57) **Abstract**

There is disclosed a folding groove 10 and a multi-core optical cable composed of the folding grooves comprising: a band member 3 having a uniform width; and a pair of notches 5 formed in a longitudinal direction, spaced apart from each other on a middle upside of the band member 3. A bottom part 7 between the notches 5 and two lateral parts 9 outside the notches 5 are defined so as to form the folding groove 10 by folding up the two lateral parts 9 centering on the notches 5. The notches 5 of the folding groove 10 are of V-shape arranged to the extent that the lateral parts 9 are to be stood up perpendicularly. Besides, the folding groove 10 according to the present invention includes at least one protruding member 17 formed on each downside end of lateral parts 9. The protruding member 17 prevents the lateral part 9 from being unfolded by being come in contact with another protruding member 17 of the adjacent folding groove 10.

## Description

### BACKGROUND OF THE INVENTION

### Field of the Invention

The present invention relates to an optical fiber groove, installed spirally on outer circumference of a circular rod wherein a central strength member is laid, for manufacturing a multi-core optical cable, and more particularly relates to a folding groove formed by folding lateral parts of a band member so as to provide a groove space wherein a plurality of optical fiber rubbons are piled up, and relates to a multi-core optical cable composed of the folding grooves.

### Discussion of Related Art

The emerging multimedia access network, especially an optical access network installed in a limited duct space like a metropolitan area requires multi-core optical cable having a smaller diameter. To meet this requirement, it is recommended to apply a ribbon type cable rather than a loose tube strand cable, since the ribbon type cable has 30% or more increase of fiber density with better additive properties compared to the loose tube strand cable.

To manufacture a multi-core optical cable using the ribbon type cable, a multi-slot rod and a U-groove are required. U.S. Patent No. 5,920,672 and U.S. Patent No. 5,517,591 disclose the multi-slot rod, having a plurality of slots formed spirally on outer circumference of a circular rod wherein a central strength member is laid, for accommodating optical fiber rubbons therein. U.S. Patent No. 5,848,212 and U.S. Patent No. 5,671,313 disclose the U-groove having a U-shape, disposed on outer circumference of the circular rod, for piling up the optical fiber ribbons therein. The present invention relates to the U-groove.

In general, an optical fiber cable composed of the U-groove has a diameter slightly larger than that of the multi-slot rod cable, and is more influenced by gravity on extruding and differential cooling problem which cause more deformation of extrusion than the multi-slot rod cable. However, since the multi-slot rod is extruded with pitch, it is very difficult to control the dimension of various grooves and the constant slot pitch. Accordingly, it is readily appreciated that the multi-slot rod type is better than the U-groove type in view of cable diameter and manufacturing cost. But both of components have problems to be solved in manufacturing process. One of them is the effect of gravity on extrusion. Both the U-groove and multi-slot rod are manufactured by profile extrusion disposed horizontally. Since each components has relatively low melt strength, when the material exits from the extruder having a horizontal disposition, it may deform due to its own weight. Furthermore, when the component size is increased, this effect of gravity is also increased, which makes it more difficult to manufacture the respective components. Comparing with both components, it is more difficult to manufacture the U-groove than the multi-slot rod. In case of the multi-slot rod, since a central strength member supports the molten material, it falls the effect of gravity.

Besides, in case of the U-groove, the differential cooling across the profile is another problem in processing to be overcome. This problem is increased when manufacturing a large size U-groove. Otherwise, in case of the multi-slot rod, it is very difficult to control the dimension of various grooves and the constant slot pitch.

Especially, the conventional U-groove is voluminous as it is extruded with U-shape. If a relatively small reel is applied to wind the U-groove, it may cause deformation of the U-groove. Therefore, when the U-groove is wound on a reel, the reel size has to be considered to prevent the deformation of the shape. The big size reel makes the size of pay-off machine voluminous accordingly.

Besides, the conventional U-groove has a further problem in winding large quantities on a pay-off drum. Accordingly, we have developed a new method to overcome these problems of the U-groove and multi-slot rod.

### SUMMARY OF THE INVENTION

Accordingly, the present invention is directed to a folding groove and multi-core optical cable composed of the same that substantially obviates one or more of the problems, limitations, and disadvantages of the related art.

It is an object of the present invention to provide a folding groove for manufacturing a multi-core optical cable easily with low cost.

It is another object of the present invention to provide a folding groove for winding a large quantity of grooves on a drum and using i small reel by keeping the groove of flat shape before being inserted into a specially designed die in a stranding line.

It is a further object of the present invention to provide a multi-core optical cable for increasing density of optical fibers loaded therein by disposing partition grooves or broad grooves on outer circumference of a circular rod wherein a central strength member is laid.

It is a further object of the present invention to provide a multi-core optical cable for increasing density of optical fibers loaded therein by disposing thin film-type grooves between folding grooves or by piling up thin film-type grooves into broad grooves.

It is an additional object of the present invention to provide methods for manufacturing and using various folding grooves.

To accomplish the objects of the present invention, there is disclosed a folding groove in accordance with an embodiment of the present invention comprising: a band member having a uniform width; and a pair of notches formed in a longitudinal direction, spaced apart from each other on a middle upside of the band member. A bottom part between the notches and two lateral parts outside the notches are defined so as to form the folding groove by folding up the two lateral parts centering on the notches. The notches of the folding groove according to the present invention are of V-shape arranged to the extent that the lateral parts are to be stood up perpendicularly. Besides, the folding groove according to the present invention includes at least one protruding member formed on each downside end of lateral parts. The protruding member serves to stand up the lateral part by being come in contact with another protruding member of the adjacent folding groove. Another protruding member according to the present invention is formed by folding downwardly an reverse notch, provided on each opposite end of lateral parts, spaced apart from the middle notches. Another protruding member according to the present invention is formed by double folding downwardly a pair of reverse notches, formed on each downside end of lateral parts, spaced apart from the middle notches. Another protruding member according to the present invention is constructed as each downside end of the lateral parts is gradually thickened up to the end.

To accomplish the objects of the present invention, there is disclosed a folding groove in accordance with another embodiment of the present invention comprising: a band member having a uniform width; and a pair of notches spaced at least twice the width of an optical fiber ribbon apart from each other on a middle upside of the band member in a longitudinal direction. Accordingly, at least two optical fiber ribbons are disposed in the folding groove in a row laterally.

To accomplish the objects of the present invention, there is disclosed a partition groove in accordance with another embodiment of the present invention comprising: a partition having the same height with the lateral part, formed integrally in the middle of the partition groove in a longitudinal direction. Accordingly, the partition groove can accommodate the plural optical fiber ribbons without using a thin film-type groove.

To accomplish the objects of the present invention, there is disclosed a multi-folding groove in accordance with another embodiment of the present invention comprising: a band member having a uniform width; at least a pair of notches formed in a longitudinal direction, spaced apart from each other on a middle upside of the band member; and at least a pair of reverse notches formed on each downside end of the band members, spaced at a predetermined interval apart from the notches. Accordingly, at least two folding grooves are provided, wherein optical fiber ribbons are piled up, by folding up the cand member centering on the notches, and at least two folded connections are established by folding downwardly the band member centering on the respective reverse notches.

To accomplish the objects of the present invention, there is disclosed a method for manufacturing a folding groove in accordance with another embodiment of the present invention comprising the steps of: extruding a folding groove, having a plurality of notches in a longitudinal direction, through a extruder having a vertical extrusion setup; cooling the folding groove extruded in a water bath; annealing the folding groove cooled; compressing the folding groove annealed for controlling thickness of the folding groove and for making design of the folding groove by passing through a compression roller; and taking up the folding groove compressed on a take-up roller.

To accomplish the objects of the present invention, there is disclosed a method for manufacturing a multi-core optical cable composed of folding grooves in accordance with another embodiment of the present invention comprising the steps of: forming a plurality of folding grooves by folding up a plurality of band members centering on a pair of notches provided on the band member; inserting a plurality of optical fiber ribbons into the folding grooves; establishing the folding arooves spirally on outer circumference of a circular rod wherein a central strength member is laid; disposing fillers between the adjacent folding grooves for keeping the lateral parts of the folding grooves almost perpendicular; and wrapping outer circumference of the folding grooves with water-proof tape. Meanwhile, The method for manufacturing a multi-core optical cable composed of folding grooves in accordance with tree present invention further comprising the steps of: applying adhesive agent to the notches prior to the step of forming the groove, without disposing the fillers.

To accomplish the objects of the present invention, there is disclosed a multi-folding groove in accordance with another embodiment of the present invention comprising: a circular rod wherein a central strength member is laid; a plurality of folding grooves disposed fast onto outer circumference of the circular rod in a spiral shape; a plurality of optical fiber ribbons piled up in the folding grooves; a plurality of fillers inserted between the adjacent folding grooves for keeping the lateral parts of the folding grooves almost perpendicular; and a predetermined coated layer for coating outer circumference of the plural folding grooves.

To accomplish the objects of the present invention, there is disclosed a multi-folding groove in accordance with another embodiment of the present invention comprising: a circular rod wherein a central strength member is laid; a plurality of folding grooves disposed at regular intervals on outer circumference of the circular rod in a spiral shape; a plurality of thin film-type grooves inserted between the folding grooves alternatively to be fastened; a plurality of optical fiber ribbons piled up in the folding grooves and the thin film-type grooves; and a predetermined coated layer for coating outer circumference of the plural folding grooves and thin film-type grooves, the lateral parts of the thin film-type grooves being at least thinner than that of the folding grooves.

To accomplish the objects of the present invention, there is disclosed a multi-folding groove in accordance with another embodiment of the present invention comprising: a circular rod wherein a central strength member is laid; a plurality of broad grooves disposed fast onto outer circumference of the circular rod in a spiral shape; at least two thin film-type grooves disposed in the broad grooves; a plurality of optical fiber ribbons piled up in the thin film-type grooves; and a predetermined coated layer for coating outer circumference of the plural folding grooves, the broad groove accommodating at least two optical fiber ribbons in a row laterally .

To accomplish the objects of the present invention, there is disclosed a multi-folding groove in accordance with another embodiment of the present invention comprising: a multi-slot rod having a plurality of slots wherein a central strength member is laid; a plurality of optical fiber ribbons piled up in the slots; a first coated layer for coating outer circumference of the multi-slot rod; a plurality of folding grooves disposed fast onto outer circumference of the first coated layer in a spiral shape; a plurality of optical fiber ribbons piled up in the folding grooves; a plurality of fillers inserted between the adjacent folding grooves for keeping the lateral parts of the folding grooves almost perpendicular; and a second coated layer for coating outer circumference of the plural folding grooves.

To accomplish the objects of the present invention, there is disclosed a multi-folding groove in accordance with another embodiment of the present invention comprising: a circular rod wherein a central strength member is laid; a plurality of folding grooves disposed fast onto outer circumference of the circular rod in a spiral shape; a plurality of optical fiber ribbons piled up in the folding grooves; a first coated layer for coating outer circumference of the plural folding grooves; a plurality of partition grooves disposed fast onto outer circumference of the fist coated layer in a spiral shape; a plurality of optical fiber ribbons piled up in the partition grooves; and a second coated layer for coating outer circumference of the plural partition grooves, the partition groove including a partition formed integrally between the notches for accomodating at least two optical fiber ribbons in a row laterally.

It is to be understood that both the foregoing general description and the following detailed description are exemplary and explanatory and are intended to provide further explanation of the invention as claimed.

### BRIEF DESCRIPTION OF THE ATTACHED DRAWINGS

Fig. 1 is a perspective view showing a stretched groove in accordance with the present invention ;
Fig. 2 is a perspective view showing a folded groove in accordance with the present invention ;
Fig. 3 is a sectional view showing a take-up drum wound by conventional U-grooves ;
Fig. 4 is a sectional view showing a take-up drum wound by folding grooves in accordance with the present invention ;
Fig. 5 is a sectional view showing a folding groove having reinforcing projections in accordance with the present invention ;
Fig. 6 is a sectional view showing a folding groove installed on a circular rod in accordance with an embodiment of the present invention ;
Fig. 7a, 7b ; 7c and 7d are showing various protruding members in accordance with another embodiments of the present invention ;
Fig. 7e, 7f, 7g and 7h are showing various protruding members disposed on circular rods in accordance with another embodiments of the present invention;
Fig. 8 is a perspective view showing a broad groove in accordance with another embodiments of the present invention;
Fig. 9a is a perspective view showing a stretched partition groove in accordance with another embodiments of the present invention;
Fig. 9b is a perspective view showing a folded partition groove in accordance with the present invention;
Fig. 10a is a perspective view showing a stretched multi-folding groove in accordance with another embodiments of the present invention;
Fig. 10b is a perspective view showing a folded multi-folding groove in accordance with another embodiments of the present invention;
Fig. 11 is a schematic illustrating an extrusion line for manufacturing a folding groove in accordance with the present invention;
Fig. 12 is an arrangement plan illustrating a stranding line for manufacturing a multi-core optical cable using folding grooves in accordance with the present invention;
Fig. 13 is a flow-chart explaining the process for making a multi-core optical cable using folding grooves in accordance with the present invention;
Fig. 14 is a sectional view showing a multi-core optical cable composed of folding grooves in accordance with another embodiment of the present invention;
Fig. 15 is a sectional view showing another multi-core optical cable conposed of folding grooves in accordance with another embodiment of the present invention;
Fig. 16 is a sectional view showing a multi-core optical cable composed of folding grooves in accordance with another embodiment of the present invention;
Fig. 17 is a sectional view showing a multi-core optical cable composed of broad grooves in accordance with another embodiment of the present invention; and
Fig. 18 is a sectional view showing a multi-core optical cable composed of partition grooves in accordance with another embodiment of the present invention.

### DETAILED DESCRIPTION OF PREFERRED EMBODIMENT

Reference will now be made in detail to the preferred embodiments of the present invention, examples of which are illustrated in the accompanying drawings.

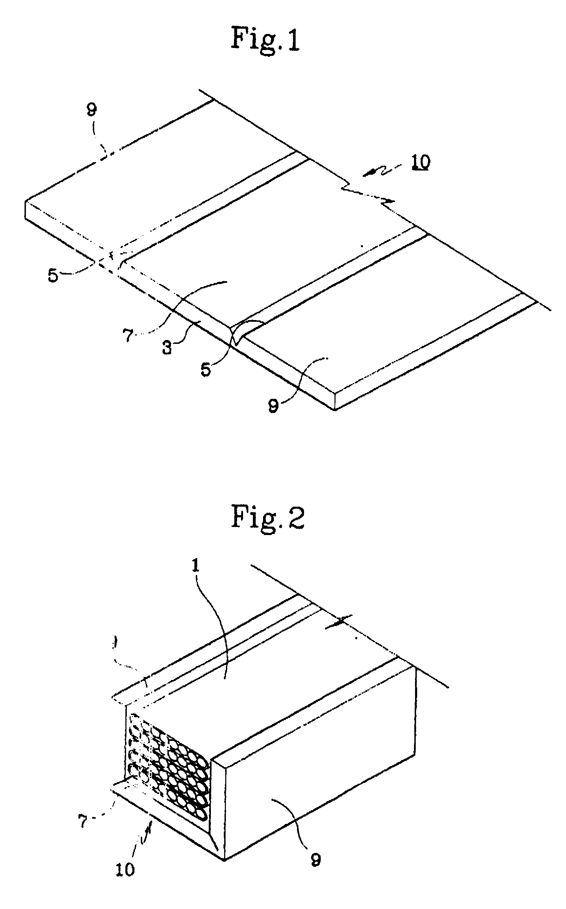

As depicted in Fig. 1, a perspective view showing a stretched groove in accordance with the present invention, a folding groove 10 keeps a flat shape before inserting into a specially designed die in a stranding line. That is, the folding groove 10 is composed of a band member 3 of a predetermined width having a pair of notches 5 spaced apart from each other in a longitudinal direction on a middle upside thereof. The band member 3 made of synthetic resins such as polyethylene has flexibility and hardness. The band member 3 may have various thicknesses and widths according to its use. The notches 5 are of V-shape arranged in the range of 50 to 135 degrees. Accordingly, a bottom part 7 and lateral parts 9 are defined respectively centering on the notches 5. As depicted in Fig. 2, a folding groove for accommodating optical fiber ribbons 1 is provided by folding up the lateral parts 9 centering on the notches 5. The folding groove of the invention has the same configuration with the conventional U-groove.

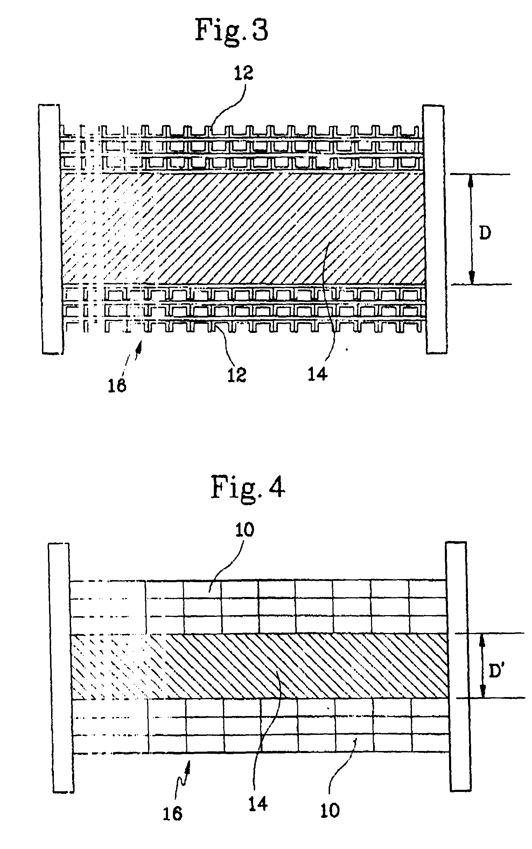

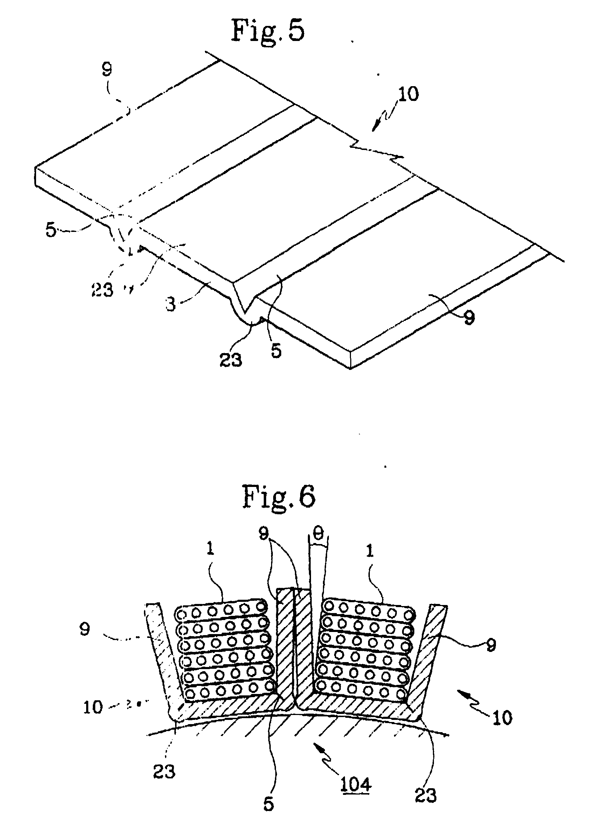

As shown in Fig. 3, a sectional view showing a take-up drum wound by conventional U-grooves, the U-grooves need a reel 14 of large diameter D and cannot be wound on a take-up drum 16 in large quantities since they are manufactured with U-shape in extrusion. However, as depicted in Fig. 4, a sectional view showing a take-up drum wound by folding grooves 10 in accordance with the invention, the folding grooves 10 can use a reel 14 of small diameter D and can be wound on a take-up drum 16 in large quantities, since they have a flat shape. Meanwhile, if the band member 3 is relatively thin, it is recommended to provide reinforcing projections 23, as shown in Fig. 5, for preventing the notch parts from being weakened.

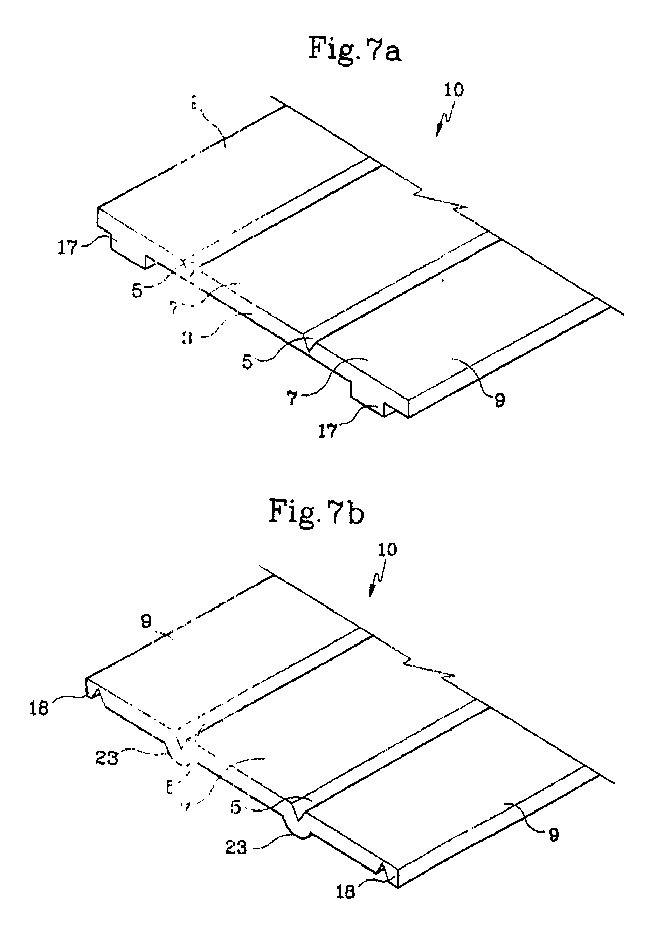

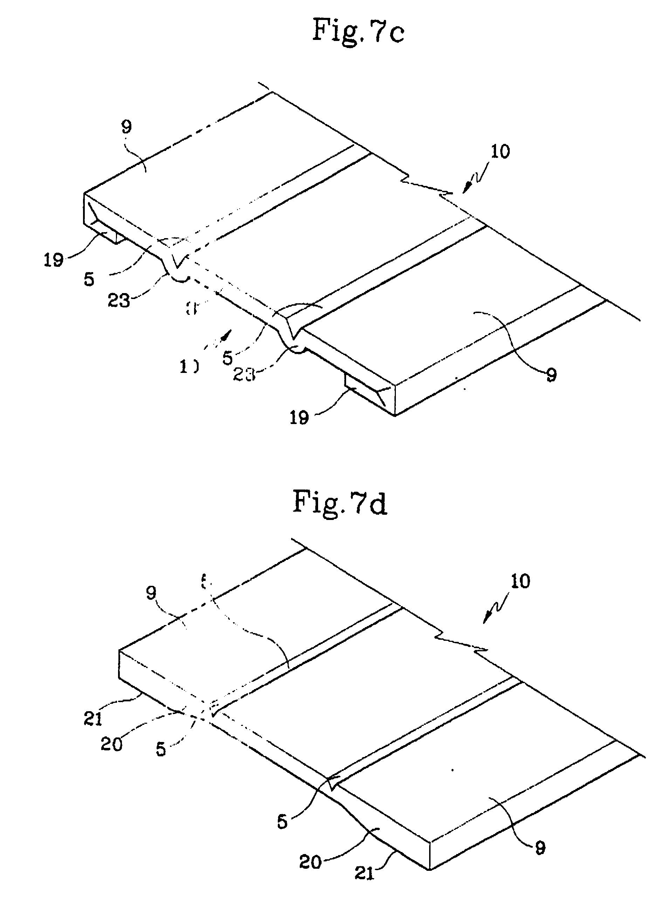

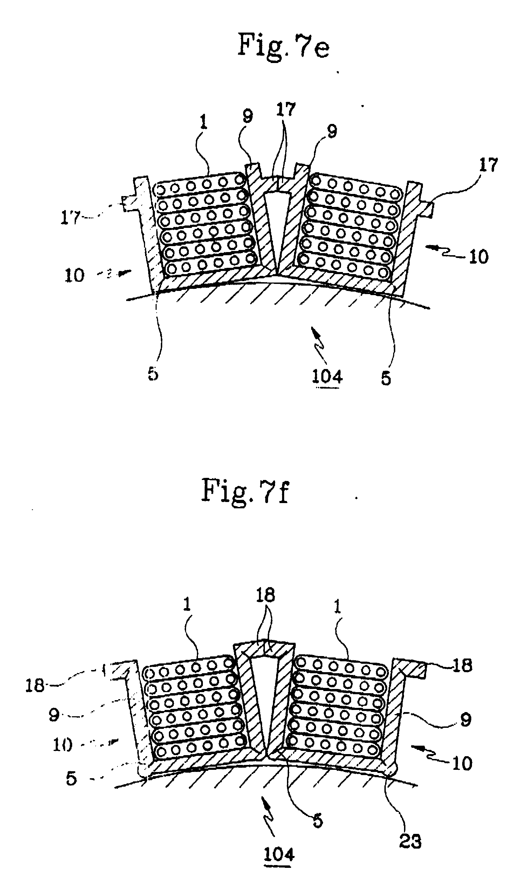

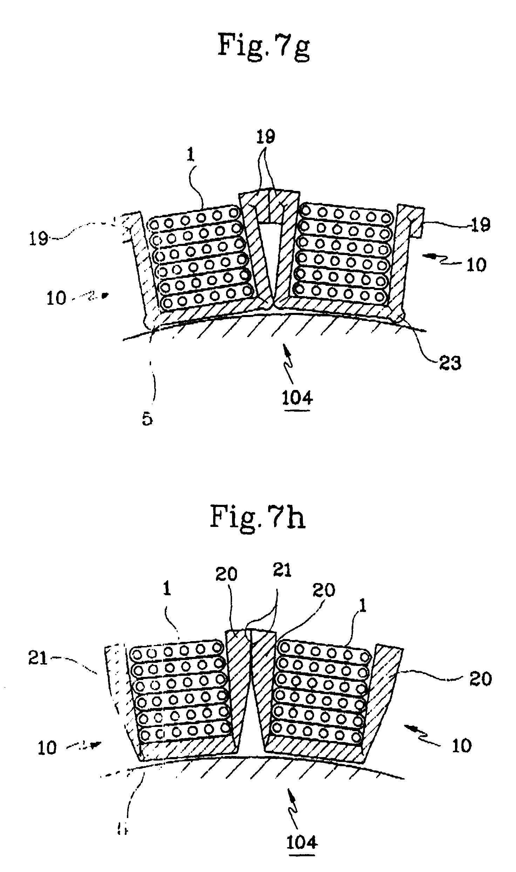

As shown in Fig. 6, the folding grooves 10 of the invention are wound on outer circumference of a circular rod spirally for making a multi-core optical cable. Here, lateral parts 9 may not be kept perpendicular since a gap is formed between adjacent grooves 10. To solve the problem, it is desired to provide at least one protruding member on each downside end of the lateral parts 9 so as to make the protruding members of adjacent lateral parts 9 come in contact with each other, thus keeping the lateral parts 9 perpendicular. To give examples of the protruding member, as shown in Fig. 6a, fixed protruding members 17 are formed integrally on each downside end of the lateral part 9. As shown in Fig. 6b, protruding members 18 to be folded are established on each downside end of the lateral parts 9. As shown in Fig. 6c, protruding members 19 to be double folded are provided or, each downside end of the lateral parts 9. Besides, as shown in Fig. 6d, protruding member 20 are formed by gradually thickening each downside of the lateral parts 9 up to the end. Here, it is desired to make flat portions 21 on each downside end of the lateral parts 9 when winding the grooves onto the take-up reel. Fig. 7e, 7f, 7g and 7h are sectional views showing various protruding members disposed on the circular rods in accordance with the present invention.

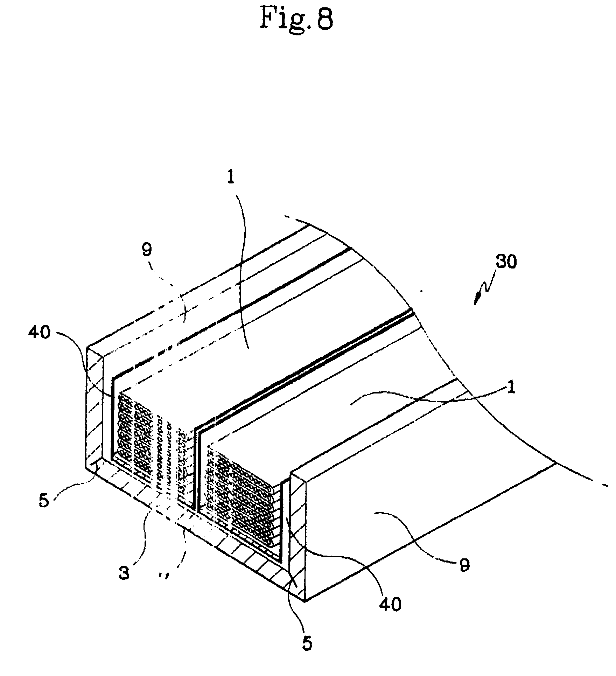

As depicted in Fig. 8, a perspective view showing a broad groove 30 in accordance with the present invention, the broad groove 30 accommodates at least two optical fiber ribbons 1 in a row laterally therein. The broad groove 30 has a similar configuration of the folding groove 10 other than the bottom part 7 on the middle side of the band member 3 is broader. Accordingly, at least two thin film-type grooves 40 are installed in the broad groove, and accommodate at least two optical fiber ribbons 1 in the film-type grooves 40.

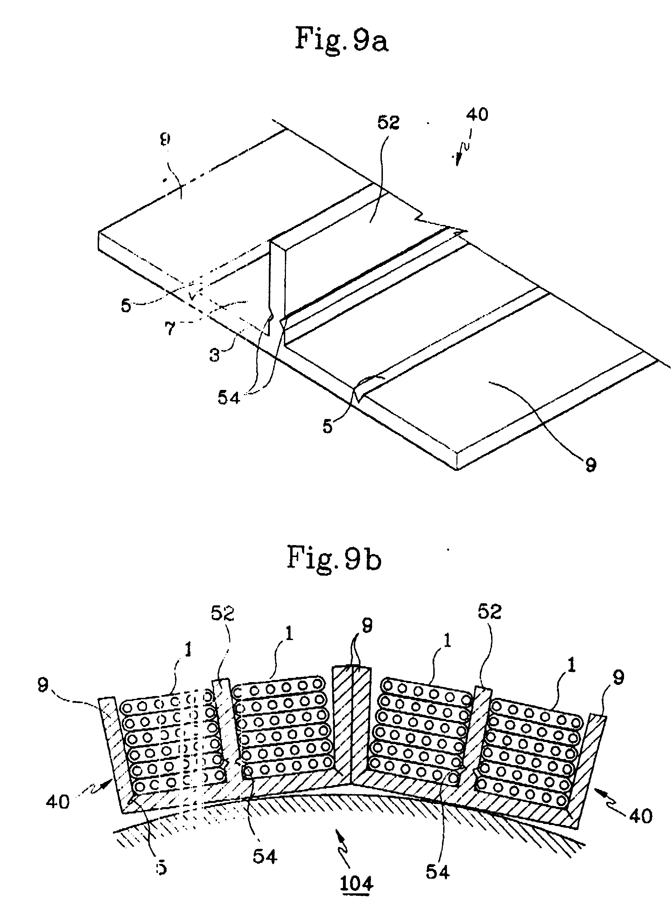

As shown in Fig. 9a, a perspective view showing a stretched partition groove 50 in accordance with the present invention, the partition groove 50 has a similar configuration of the folding groove 10 other than a partition 52 is further provided on the middle side of the band member 3. The partition 52 of the same height with the lateral part 9 has at least one folding notch 54 at the bottom thereof so as to lay the partition 52 horizontally. Accordingly, when folding up the two lateral parts 9 and partition 52 respectively, two grooves are formed on both sides of the partition 52 for accommodating a plurality of optical fiber ribbons 1.

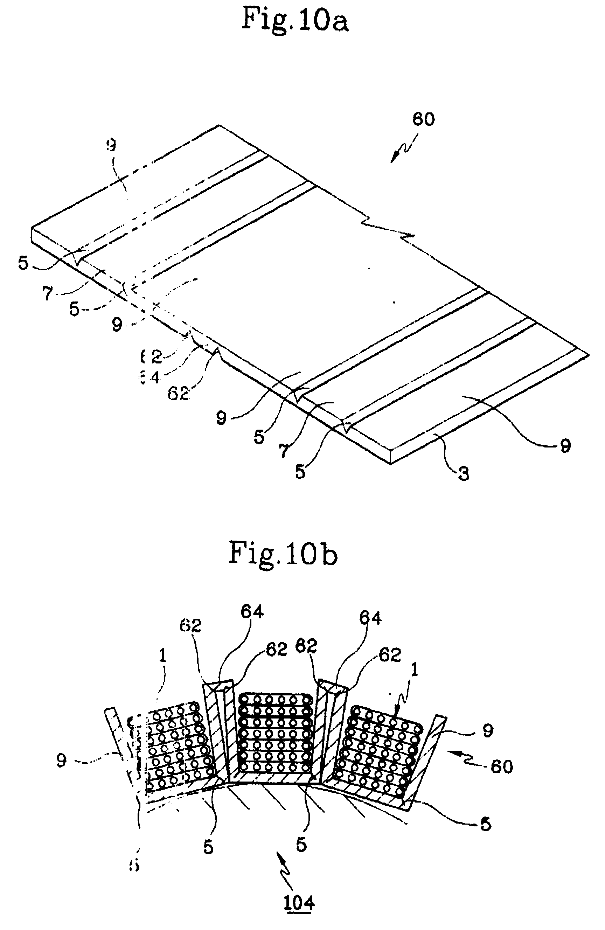

As shown in Fig. 10a and 10b, perspective views showing a stretched and folded multi-folding grooves 60, respectively, in accordance with the present invention, the multi-folding groove 60 has at least two folding grooves connected with each other. That is the multi-folding groove 60 includes at least a pair of notches 5 formed in a longitudinal direction, spaced apart from each other on a middle upside of the band member 3 and at least a pair of reverse notches 62 formed on a downside of the sand member 3, spaced at a predetermined interval apart from the notches. Accordingly, when folding up the band member 3 centering on the respective notches 5, at least two grooves are formed wherein a plurality of optical fiber ribbons 1 are piled up. Besides, when folding the band member 5 downwardly centering on the respective reverse notches, at least two folded connections 64 are established for keeping the lateral parts of the adjacent folding grooves perpendicular.

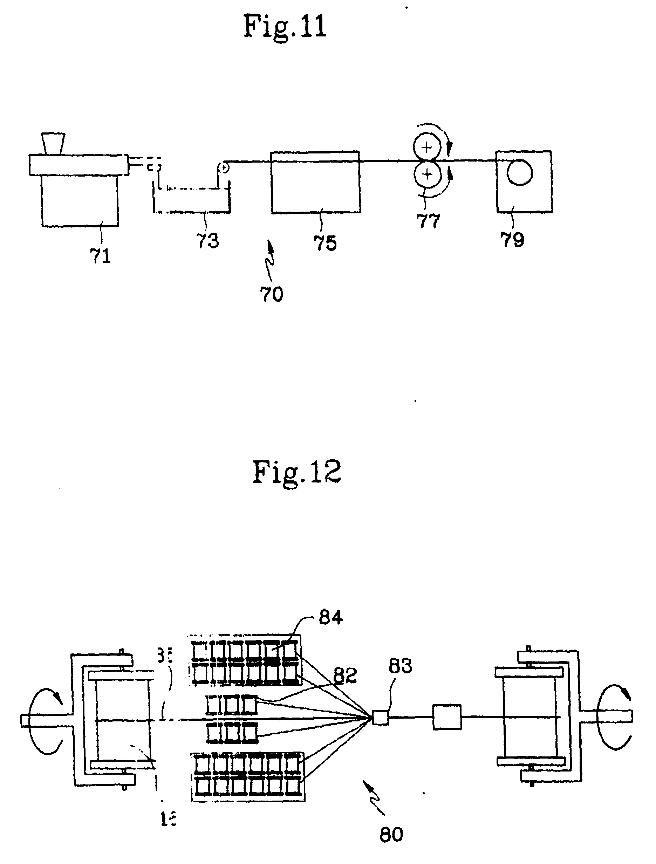

Meanwhile, the folding grooves according to the present invention are manufactured through an extrusion line as shown in Fig. 11. That is, the method for manufacturing a folding groove comprising the steps of: extruding a folding groove, having a plurality of notches in a longitudinal direction, through a extruder having a vertical extrusion setup (ST71); cooling the folding groove extruded in a water bath (ST73); annealing the folding groove cooled (ST75); compressing the folding groove annealed for controlling thickness of the folding groove and for making design of the folding groove by passing through a compression roller (ST77); and taking up the folding groove compressed on a take-up roller (ST79). Here, especially, the extrusion line overcomes the various problems of the conventional U-groove by minimizing the effect of gravity and controlling the cooling process in the cooling and annealing steps uniformly.

Referring to Fig. 12, an arrangement plan illustrating a stranding line for manufacturing a multi-core optical cable using folding grooves in accordance with the preferred embodiment of the present invention, reference numeral 82 denotes a pay-off for supplying folding grooves, and numeral 84 is a pay-off for supplying optical fiber ribbons. The folding groove arid optical fiber ribbons are wound spirally on outer circumference of a circular rod 85, including a central strength member, through a specially designed die 83 in a stranding line. The folding groove is of flat shape prior to inserting into the die 83 and has U-shape after passing the die 83.

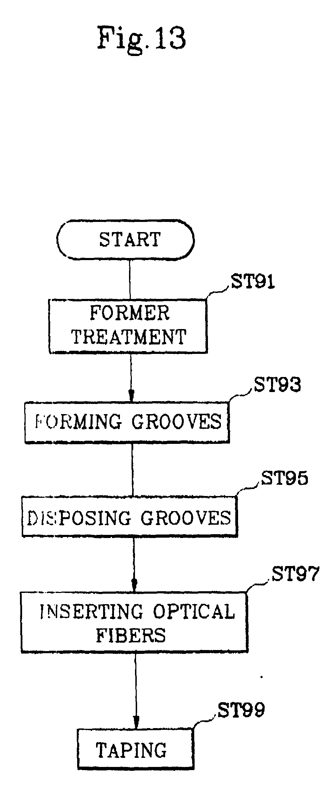

A flow-chart explaining the process for making a multi-core optical cable using folding grooves in accordance with the present invention is shown in Fig. 13. First, the step of former treatments (ST91) are either for applying adhesive agent to the notches 5, or for applying heat to the notches 5 so as to fixing the lateral parts 9. Then, a multi-core optical cable composed of folding grooves is manufactured through the steps of: forming a plurality of folding grooves by folding up a plurality of band members 3 centering on the notches 5 (ST93); disposing the folding grooves spirally on outer circumference of a circular rod wherein a central strength member is laid (ST95); inserting a plurality of optical fiber ribbons 1 into the folding grooves established (ST97); and wrapping outer circumference of the folding grooves with water-proof tape (ST99). Meanwhile, it is desired to process the steps of: forming folding grooves (ST93); and disposing the folding grooves spirally on outer circumference cf a circular rod (ST95) at the same time by passing through the die 83. Besides, if the step of former treatment (ST91) is omitted, it is possible to execute the step of inserting fillers for keep the folding grooves perpendicular by passing through the die 83. Furthermore, in case of the partition groove 50, the partitions 52 are to be set up in the step of forming folding grooves (ST93), and in case of the broad groove 30, the thin film-type grooves 40 are to be inserted irto the broad groove 30 prior to the step of inserting optical fiber ribbon 1 into the folding groove (ST97). Especially, the step of setting up the partition (ST93) may be omitted, since the partition 52 is set up by itself if the partition 52 has a strong elasticity.

Hereinafter, methods for manufacturing multi-core optical cables composed of folding grooves in accordance with the present invention will be discussed in detail.

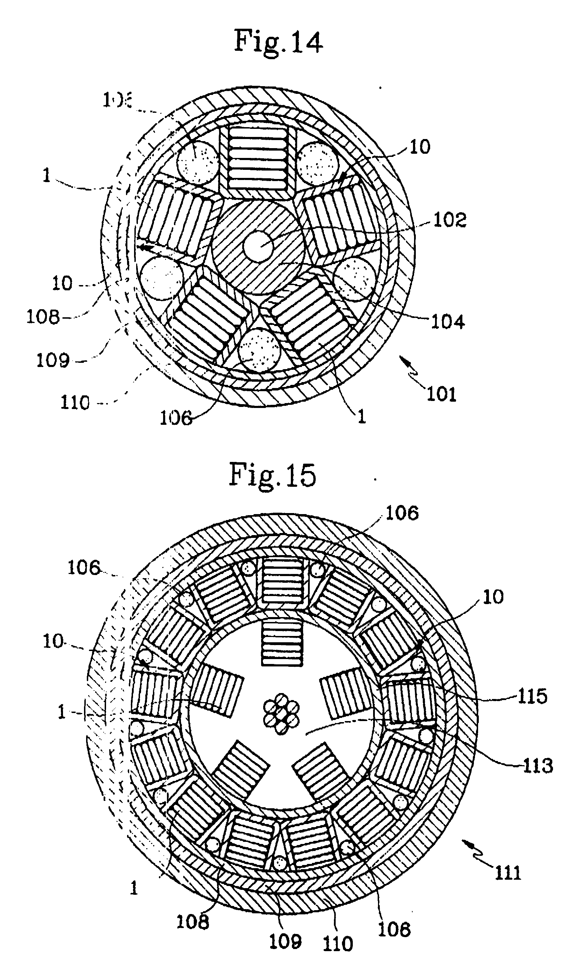

Referring to Fig. 14, the folding grooves 10 according to the invention are disposed spirally fast onto the outer circumference of the circular rod 104 wherein the central strength member 102 is laid. Reference numeral 106 denotes filler inserted irto to a gap between the folding grooves 10. The filler 96 prevents the lateral parts 9 of the folding grooves 10 from being unfolded outwardly. In case of inserting the filler 96, there is no necessity for applying adhesive agent to the notches 5. Besides, a plurality of optical fiber ribbons 1 are piled up in the folding grooves 10 and a predetermined coated layer 108 covers the outer circumference. The coated layers 108 include a water-proof layer, a metal layer made of aluminum or steel for protecting from outer impact, and a polyethylene jacket for the exterior covering.

Now referring to Fig. 15, a sectional view showing another multi-core optical cable 111 composed of folding grooves in accordance with the present invention, the multi-core optical cable 111 increases density of optical fibers using the conventional multi-slot rod 113 and the folding grooves 10 according to the invention. The outer circumference of the multi-slot rod 113 is coated with the a first coated layer 115 and the outer circumference of the first coated layer 115 is surround with the plural folding grooves 10 spirally.

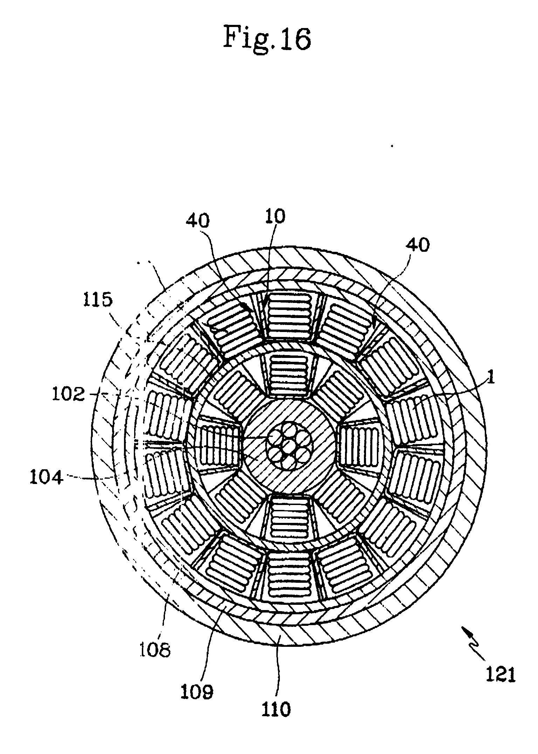

Meanwhile, Fig. 16 shows a multi-core optical cable 121 composed of the folding grooves 10 and the thin film-type grooves 40. The folding grooves 10 are disposed spirally on the outer circumference of the first coated layer 115 spaced apart from each other. The thin film-type grooves 40 are arranged closely oetween the folding grooves 10. Here, since the lateral parts 9 of the thin film-type groove 40 is thinner than that of the folding groove 10, it is possible to arrange more optical fiber ribbons.

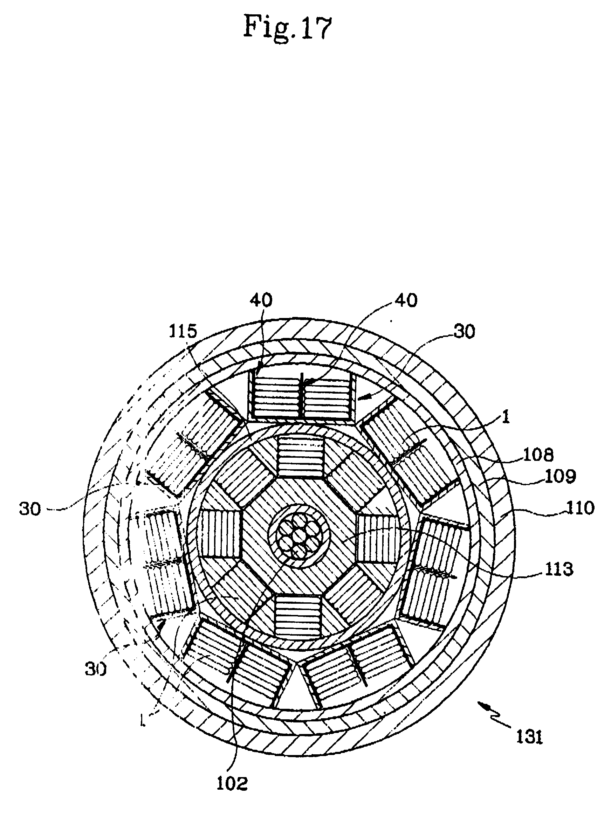

Besides, Fig. 17 shows a multi-core optical cable 131 composed of broad grooves 30. The broad groove 30 are disposed spirally on the outer circumference of the multi-slot rod 113 wherein the plural optical fiber ribbons 1 are loaded. In the broad groove 30, there are provided two thin film-type grooves 40 wherein the plural optical fiber ribbons 1 are also loaded.

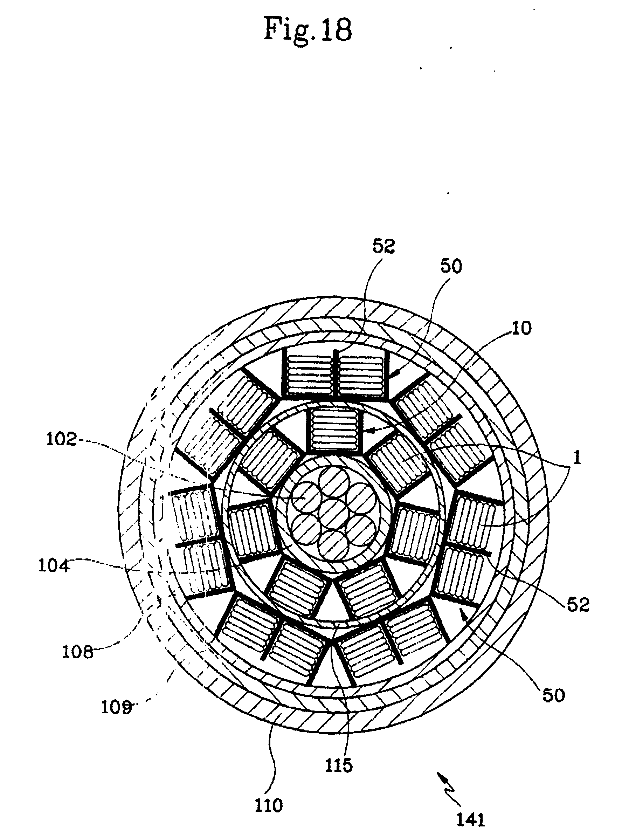

Furthermore, Fig. 18 illustrates a multi-core optical cable 141 composed of partition grooves 50. The plural folding grooves 10 are disposed spirally on the outer circumference of the circular rod 104 wherein the central strength member 102 is laid. The outer circumference of the plural folding grooves 10 is coated with the first coated layer 115. Then, the partition grooves 50 are arranged spirally and closely on the outer circumference of the first coated layer 115. A second coated layer 145 surrounds the outer circumference of the partition grooves 50 wherein the plural optical fiber ribbons 1 are loaded.

It will be apparent to those skilled in the art that various modifications and variations can be made in a folding groove and multi-core optical cable composed of the same in accordance with the present invention without departing from the spirit or scope of the invention. Thus, it is intended that the present invention cover the modifications and variations of this invention provided they come within the scope of the appended claims and their equivalents.

## Claims

1. A folding groove comprising:
a band member having a uniform width; and
a pair of notches formed in a longitudinal direction, spaced apart from each other on a middle upside of the band member,
a bottom part between the notches and two lateral parts outside the notches being defined so as to form the folding groove by folding up the two lateral parts centering on the notches.

2. The folding groove according to claim 1, wherein the width of the bottom part is at least equal to or larger than that of an optical fiber ribbon to be piled up.

3. The folding groove according to claim 1, wherein the notches are of V-shape arranged in the range of 50 to 135 degrees.

4. The folding groove according to claim 1, wherein the lateral parts are to be stood up perpendicularly, and the height of the lateral parts is at least equal to or higher than that of optical fiber ribbons piled up.

5. The folding groove according to claim 1, wherein each lateral part further includes at least one protruding member on each downside end thereof.

6. The folding groove according to claim 1, wherein a reinforcing projection is further provided on each opposite downside of the notches in the same direction of the notch.

7. The folding groove according to claim 5, wherein the protruding member is formed by folding downwardly an reverse notch, formed on each downside end of lateral parts, spaced apart from the middle notches.

8. The folding groove according to claim 5, wherein the protruding member is formed by double folding downwardly a pair of reverse notches, formed on each downside end of lateral parts, spaced apart from the middle notches.

9. The folding groove according to claim 5, wherein each downside of the lateral parts is gradually thickened up to the end, thus serving as a protruding member.

10. A broad groove comprising:
a band member having a uniform width; and
a pair of notches spaced to the extent that at least two optical fiber ribbons are disposed in a row laterally apart from each other on a middle upside of the band member in a longitudinal direction,
a bottom part between the notches, wherein at least two optical fiber ribbons are arranged in a row laterally, and two lateral parts on both sides of the bottom part being defined so as to form the folding groove for accommodating the plural optical fiber ribbons by folding up the two lateral parts centering on the notches.

11. The folding groove according to claim 10 further comprising:
a partition having the same height with the lateral part, formed integrally between the notches.

12. The folding groove according to claim 11, wherein the partition furthec includes at least one folding notch at the bottom thereof so as to lay the partition horizontally.

13. A multi-folding groove comprising:
a band member having a uniform width;
at least a pair of notches formed in a longitudinal direction, spaced apart from each other on a middle upside of the band member; and
at least a pair of reverse notches formed on a downside of the band member, spaced at a predetermined interval apart from the notches,
at least two folding grooves being provided, wherein optical fiber riobons are piled up, by folding up the band member centering on the respective notches, and at least two folded connections being established by folding downwardly the band member centering on the respective reverse notches.

14. A method for manufacturing a folding groove comprising the steps of:
extruding a folding groove, having a plurality of notches in a longitudinal direction, through a extruder having a vertical extrusion setup;
cooling the folding groove extruded in a water bath;
annealing the folding groove cooled;
compressing the folding groove annealed for controlling thickness of the folding groove and for making design of the folding groove by passing through a compression roller; and
taking up the folding groove compressed on a take-up roller.

15. A method for manufacturing a multi-core optical cable composed of folding grooves comprising the steps of:
forming a plurality of folding grooves by folding up a plurality of band members centering on a pair of notches provided on the band member;
inserting a plurality of optical fiber ribbons into the folding grooves;
establishing the folding grooves spirally on outer circumference of a circular rod wherein a central strength member is laid;
disposing fillers between the adjacent folding grooves for keeping the lateral parts of the folding grooves almost perpendicular; and
wrapping outer circumference of the folding grooves with water-proof tape.

16. The method for manufacturing multi-core optical cable composed of folding grooves according to claim 15 further comprising the step of: applying adhesive agent to the notches prior to the step of forming the groove, without disposing the fillers.

17. The method for manufacturing multi-core optical cable composed of folding grooves according to claim 16, wherein the step of applying adhesive agent is substituted for applying heat to the notches.

18. A multi-core optical cable composed of folding grooves comprising:
a circular rod wherein a central strength member is laid;
a plurality of folding grooves disposed fast onto outer circumference of the circular rod in a spiral shape;
a plurality of optical fiber ribbons piled up in the folding grooves;
a plurality of fillers inserted between the adjacent folding grooves for keeping the lateral parts of the folding grooves almost perpendicular; and
a predetermined coated layer for coating outer circumference of the plural folding grooves.

19. A multi-core optical cable composed of folding grooves comprising:
a circular rod wherein a central strength member is laid;
a plurality of folding grooves disposed at regular intervals on outer circumference of the circular rod in a spiral shape;
a plurality of thin film-type grooves inserted between the folding grooves alternatively to be fastened;
a plurality, of optical fiber ribbons piled up in the folding grooves and the thin film-type grooves; and
a predetermined coated layer for coating outer circumference of the plural folding grooves and thin film-type grooves,
the lateral parts of the thin film-type grooves being at least thinner than that of the folding grooves.

20. A multi-core optical cable composed of folding grooves comprising:
a circular rod wherein a central strength member is laid;
a plurality of broad grooves disposed fast onto outer circumference of the circular rod in a spiral shape;
at least two thin film-type grooves disposed in the broad grooves;
a plurality of optical fiber ribbons piled up in the thin film-type grooves; and
a predetermined coated layer for coating outer circumference of the plural folding grooves,
the broad groove accommodating at least two optical fiber ribbons in a row laterally .

21. A multi-core optical cable composed of folding grooves comprising:
a multi-slot rod having a plurality of slots wherein a central strength member is laid;
a plurality of optical fiber ribbons piled up in the slots;
a first coated layer for coating outer circumference of the multi-slot rod;
a plurality of folding grooves disposed fast onto outer circumference of the first coated layer in a spiral shape;
a plurality of optical fiber ribbons piled up in the folding grooves;
a plurality of fillers inserted between the adjacent folding grooves for keeping the lateral parts of the folding grooves almost perpendicular; and
a second coated layer for coating outer circumference of the plural folding grooves.

22. A multi-core optical cable composed of folding grooves comprising:
a circular rod wherein a central strength member is laid;
a plurality of folding grooves disposed fast onto outer circumference of the circular rod in a spiral shape;
a plurality of optical fiber ribbons piled up in the folding grooves;
a first coated layer for coating outer circumference of the plural folding grooves;
a plurality of partition grooves disposed fast onto outer circumference of the fist coated layer in a spiral shape;
a plurality of optical fiber ribbons piled up in the partition grooves; and
a second coated layer for coating outer circumference of the plural partition grooves,
the partition groove including a partition formed integrally between the notches for accommodating at least two optical fiber ribbons in a row laterally.
